# EUROPÄISCHE PATENTSCHRIFT

(11) **EP 1 078 195 B1**
(45) Veröffentlichungstag und Bekanntmachung des Hinweises auf die Patenterteilung: **05.11.2003**
(21) Anmeldenummer: 99920822.6
(22) Anmeldetag: 30.04.1999
(51) Int. Cl.: F16L 47/00, F16L 41/06

(54) **ANBOHRARMATUR FÜR UNTER DRUCK STEHENDE ROHRLEITUNGEN**
TAPPING STOP VALVE FOR PRESSURISED PIPELINES
ACCESSOIRE DE PERCEMENT DE CONDUITES SOUS PRESSION

(30) Priorität: 06.05.1998 DE 29807990 U
(43) Veröffentlichungstag der Anmeldung: 28.02.2001
(73) Patentinhaber: DA-Kunststoff GmbH, 42859 Remscheid (DE)
(72) Erfinder: HINTZEN, Werner, D-50765 Köln (DE)
(74) Vertreter: Mentzel, Norbert, Dipl.-Phys.
(86) Internationale Anmeldenummer: EP9902938
(87) Internationale Veröffentlichungsnummer: WO99057479

(56) Entgegenhaltungen:
- DE-A- 4 217 982
- DE-A- 4 303 970

## Beschreibung

Die Erfindung richtet sich auf eine Anbohrarmatur der im Oberbegriff von Anspruch 1 angegebenen Art. Bei unter Mediendruck stehenden Rohrleitungen, die als Medium z.B. Gas oder Wasser führen, ist an einer bestimmten Stelle der Anschluss einer zur Medienabführung dienenden Abzweigleitung erforderlich. Dazu verwendet man Anbohrarmaturen, deren Gehäuse mit dem Innenende ihres Hauptstutzens an der anzubohrenden Stelle der Rohrleitung befestigt wird. An dem Abzweigstutzen des Gehäuses wird dann eine Abzweigleitung angeschlossen. Nach dem Anbohren strömt das Medium aus der Rohrleitung in die Abzweigleitung und wird damit zu einem Verbraucher od. dgl. weitergeleitet. Um später einmal bedarfsweise den Medienfluss zum Abzweigstutzen abzusperren, verwendet man das drehbetätigbare Bohrwerkzeug zugleich als Ventilglied, welches die Medienströmung absperren kann.

Bei der bekannten Anbohrarmatur dieser Art (DE 42 17 982 C2) greift das Bohrwerkzeug mit einem Außengewinde in das Innengewinde einer im Kunststoffmaterial des Hauptstutzens integrierten Führungsbuchse und wird dort bei seiner Drehbetätigung verschraubt. Das Schneidwerkzeug ist zugleich das Ventilglied, denn es besitzt einen durch einen radialen Absatz erzeugten Ventilteller, der mit einem am Innenende der Führungsbuchse vorgesehenen Ventilsitz zusammenwirkt. Der Nachteil dieser bekannten Armaturen ist, dass sie mechanisch nur begrenzt belastbar sind. Beim Verlegen der Armatur und bei ihrem Gebrauch können Belastungen auftreten, denen die Anbohrarmatur nicht gewachsen ist. Es müssen daher besondere Vorkehrungen getroffen werden oder Kontrollen darüber ausgeführt werden, ob die Armatur noch voll funktionsfähig ist. Das ist kostspielig, zeitaufwendig und mühsam.

Der Erfindung liegt die Aufgabe zugrunde, eine einfache, zuverlässige Anbohrarmatur zu entwickeln, die auch hohen Belastungen standhalten kann. Dies wird erfindungsgemäß durch die im Kennzeichen des Anspruches 1 angeführten Maßnahmen erreicht, denen folgende besondere Bedeutung zukommt.

Die Erfindung bildet zunächst eine metallische Baueinheit aus, die sich nicht nur in den Bereich des Hauptstutzens sondern vor allem in den Bereich des Abzweigstutzens erstreckt und dort ins Kunststoffmaterial integriert wird. Die Baueinheit ist somit eine Art "Armierung", welche alle maßgeblichen, Belastungen unterworfenen Bestandteile der aus Kunststoffmaterial bestehenden Armatur verstärkt. Durch die feste Verbindung zwischen der Anschlussbuchse und der Führungsbuchse der erfindungsgemäßen Baueinheit werden die vor allem auf den Abzweigstutzen einwirkenden Belastungen auf die Führungsbuchse übertragen und dort vom Hauptstutzen des Gehäuses übernommen. Damit sind an der Entlastung und Verstärkung des Abzweigstutzens maßgeblich auch die Elemente des Hauptstutzens beteiligt. Die Belastungen können daher von dem massiven Hauptstutzen an die Befestigungsstelle an der Rohrleitung weitergegeben werden.

Durch die erfindungsgemäße Baueinheit werden zunächst Zugbelastungen und Biegebelastungen aufgenommen, die sich beim Setzen der Erde oder in Folge von Temperaturunterschieden an der Abzweigleitung und ihrer Anschlussstelle am Abzweigstutzen ergeben könnten. Es treten aber auch häufig Torsionen auf, die wegen der L- bzw. T-förmigen Struktur der erfindungsgemaßen Baueinheit besonders gut von der Führungsbuchse im Hauptstutzen aufgenommen werden können. Solche Belastungen ergeben sich auch beim Verlegen der Leitungen im Erdreich oder später beim Ausgraben, wenn z.B. eine Baggerschaufel die Leitung tangiert oder erfasst. Die erfindungsgemäße Armatur ist durch die Baueinheit sicherer geworden, weshalb die Gefahr von Defekten entscheidend herabgesetzt ist. Dabei ist die Herstellung der Armatur in üblicher Weise in einem Spritzgusswerkzeug ohne weiteres möglich; man braucht lediglich die vorbereitete Baueinheit als Werkzeug-Kern zu benutzen, der dann gemeinsam von dem Kunststoffmaterial umspritzt wird.

Weitere Maßnahmen und Vorteile der Erfindung ergeben sich aus den Unteransprüchen, der nachfolgenden Beschreibung und den Zeichnungen. In den Zeichnungen ist die Erfindung in einem Ausführungsbeispiel dargestellt. Es zeigen:
- Fig. 1: einen Axialschnitt durch die erfindungsgemäße Anbohrarmatur nach deren Befestigung an einer Rohrleitung,
- Fig. 2a - 4b,: in starker Vergrößerung, den Querschnitt und den Axialschnitt durch ein wichtiges Teilstück einer Baueinheit, die in der erfindungsgemäßen Anbohrarmatur integriert ist, und zwar in verschiedenen Arbeitsschritten, wobei die Schnittführungen für die Querschnitte von Fig. 2a, 3a und 4a in den jeweiligen Längsschnitten 2b, 3b und 4b durch die Schnittlinien IIa- IIa, IIIa - IIIa und IVa - IVb gezeigt sind, und
- Fig. 5a + 5b,: in annähernd natürlicher Größe, einen Längsschnitt und einen Querschnitt durch die Baueinheit der erfindungsgemäßen Armatur, wobei die Führung des Querschnitts durch die Schnittlinie Va - Va von Fig. 4b zu entnehmen ist.

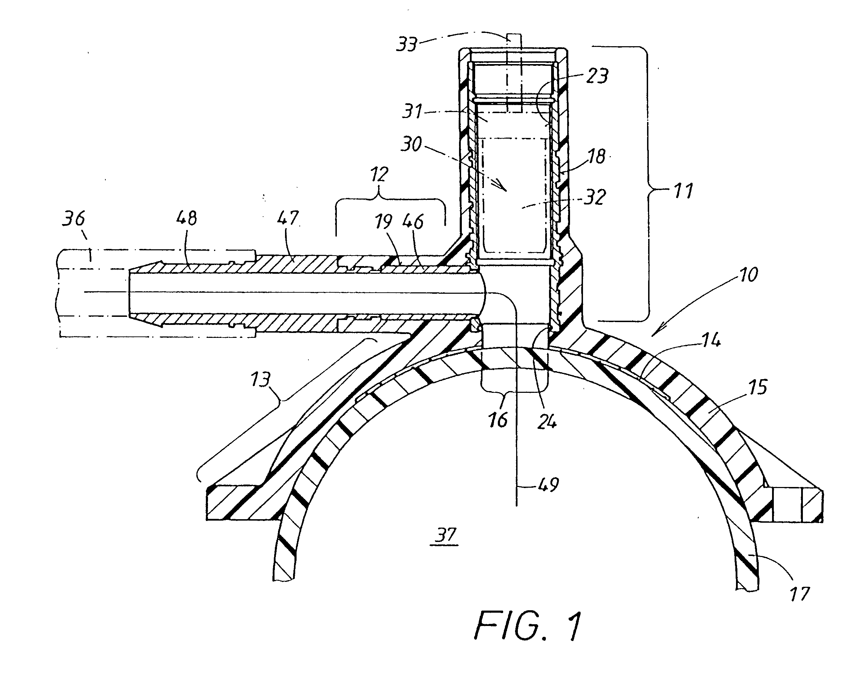

Die in Fig. 1 gezeigte Anbohrarmatur nach der Erfindung besteht aus einem Gehäuse 10 aus Kunststoffmaterial 15, das sich in zwei Stutzen 11, 12 und einen Sattel 13 gliedern lässt. An der Innenfläche des Sattels 13 sind Heizleiter integriert, die zweckmäßigerweise in eine vorgefertigte Kunststoffeinlage 14 integriert sind.

Die Armatur ist dazu bestimmt, um mittels eines in Fig. 1 lediglich strichpunktiert angedeuteten Bohrwerkzeugs 30 an einer bestimmten Stelle 16 einer ihrerseits aus Kunststoff bestehenden Rohrleitung 17 eine Bohrung einzuschneiden. Zur Führung des Bohrwerkzeugs 30 dient der eine Stutzen 11, der an seiner Innenfläche 18 mittelbar, über eine Führungsbuchse 21, ein Innengewinde 23 trägt. Das Bohrwerkzeug 30 ist seinerseits mit einem, ein Außengewinde aufweisenden Gewindekopf 31 ausgerüstet. Zur Betätigung des Bohrwerkzeugs 30 verwendet man ein in Fig. 1 angedeutetes Betätigungswerkzeug 33, z.B. eine Ventilspindel, mit welcher sich das Bohrwerkzeug 30 im Hauptstutzen 11 ein- und ausschrauben lässt. Das Bohrwerkzeug 30 besitzt einen Schneidzylinder 32 am Gewindekopf 31, der beim Herausschrauben des Werkzeugs 30 an der Anbohrstelle 16 die erwähnte Bohrung schneidet.

Die Armatur wird zwar durch Einleiten einer elektrischen Heizenergie im Bereich der Kunststoffeinlage 14 an der Mantelfläche der Rohrleitung 17 festgeschweißt, doch erfolgt die Befestigung auch auf mechanischem Wege durch eine nicht näher gezeigte Rohrschelle od. dgl., welche mit dem Sattel 13 verbunden ist, z.B. durch Spannschrauben. Das Bohrwerkzeug 30 kann seinerseits als Ventilglied fungieren. Das Rohrinnere 37 der Rohrleitung 17 steht unter Mediendruck, z.B. unter dem Druck eines Gases oder von Wasser. Nach dem Anbohren des Rohres an der Stelle 16 strömt dieses Medium durch die Armatur vom Hauptstutzen 11 in den damit verbundenen anderen Stutzen 12, der als "Abzweigstutzen" bezeichnet werden soll. Das Medium strömt dann aus der angebohrten Rohrleitung 17 ins Innere des Abzweigstutzens 12, wo es dann an eine dort in noch näher zu beschreibender Weise angeschlossene Zweigleitung weitergeführt wird, die zur Leitung des Mediums zu einem Verbraucher od. dgl. dient.

In einer herausgeschraubten Lage können ventilartige Dichtstellen zwischen dem Werkzeug 30 und dem Gehäuse 10 wirksam werden, die eine Abdichtung bewirken. Die Abdichtmittel bestehen im vorliegenden Fall aus einer Ringdichtung, die in einer Innennut 24 des Hauptstutzens 11 sitzt und mit der Mantelfläche des vorerwähnten Schneidzylinders 32 zusammenwirkt. Diese Innennut 24 ist zweckmäßigerweise in die vorerwähnte Führungsbuchse 21 integriert.

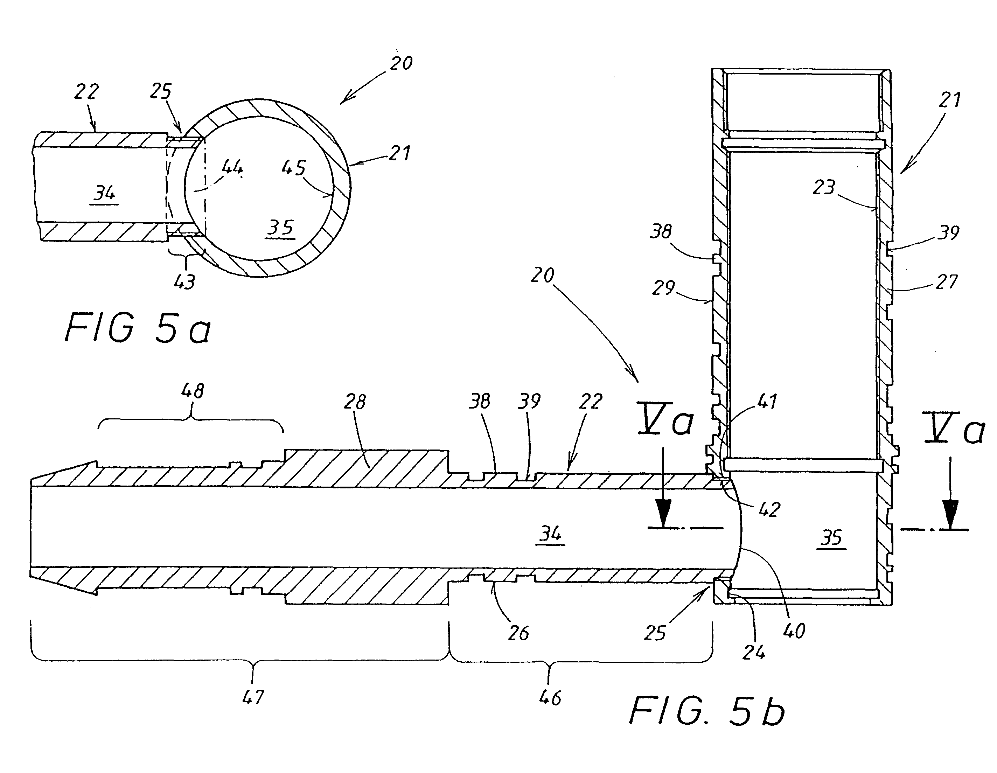

Die Besonderheit der Erfindung besteht aus einer in Fig. 5b im Längsschnitt dargestellten metallischen Baueinheit 20, die aus wenigstens zwei miteinander fest verbundenen Buchsen 21, 22 besteht. Diese Buchsen 21, 22 könnten zwar durch Spritzgussmaterial einstückig hergestellt sein, doch ist im bevorzugten Ausführungsbeispiel eine zweistückige Herstellung der Baueinheit 20 vorgesehen, die eine besondere Verbindungsstelle 25 der beiden Buchsen 21, 22 entstehen lässt. Zweckmäßigerweise verwendet man für die Herstellung der beiden Buchsen 21, 22 auch unterschiedliche Metalle 27, 28; nämlich, im vorliegenden Fall, Messing 27 einerseits und Rotguss 28 andererseits.

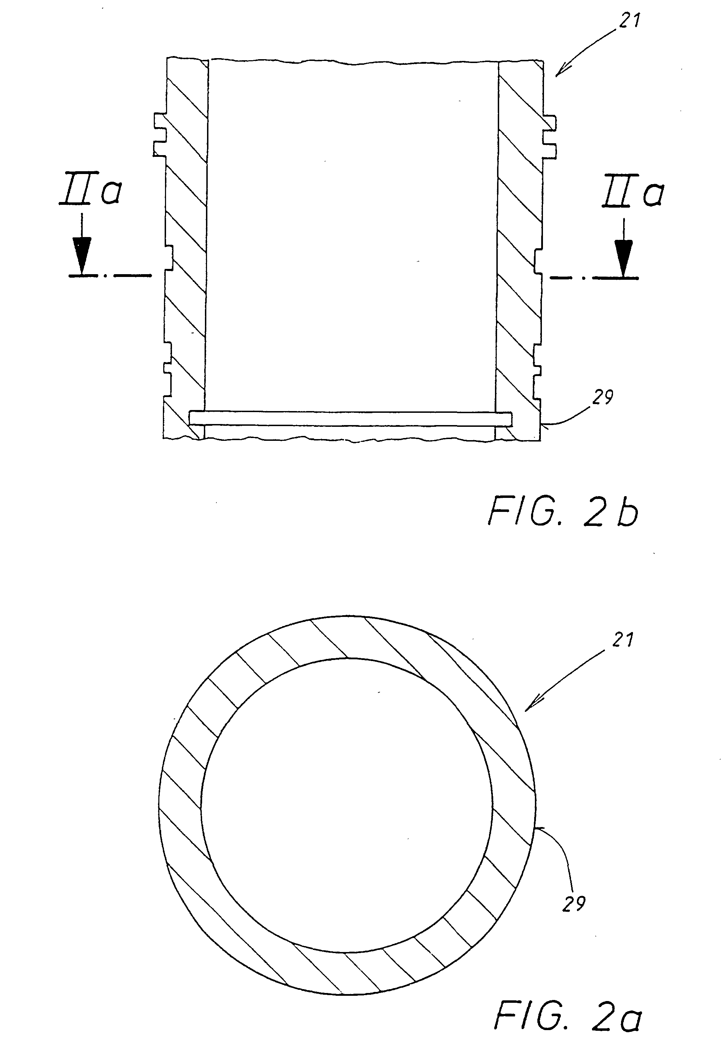

Die aus Messing 27 bestehende Buchse 21 ist die bereits erwähnte "Führungsbuchse", die an der Innenfläche 18 des Hauptstutzens integriert wird und das vorerwähnte Innengewinde 23 und die vorgenannte Innennut 24 beinhaltet. Die andere Buchse 22 soll aus später noch deutlich werdenden Gründen nachfolgend "Anschlussbuchse" der Baueinheit 20 bezeichnet werden. Die vorerwähnte Verbindung dieser beiden Buchsen 21, 22 kommt in folgender, aus den Fig. 2a bis 5b ersichtlichen Weise zustande.

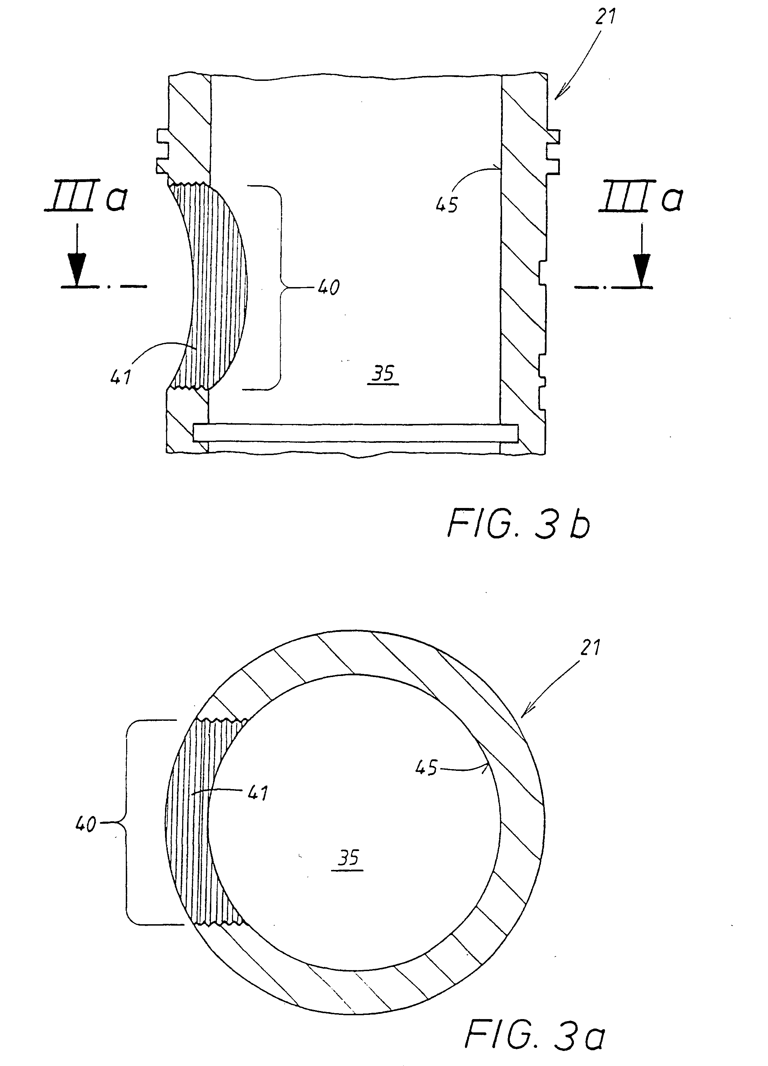

In den Fig. 2a bis 4b ist lediglich der Bereich der vorerwähnten Verbindungsstelle 25 der Baueinheit 20 gezeigt. Die Fig. 2a und 2b zeigen die Ausgangssituation für die erfindungsgemäße Baueinheit 20, wo zunächst die Führungsbuchse 20 erstellt worden ist. Dann wird in diesem Bereich eine seitliche Öffnung 40 gemäß Fig. 3a, 3b in die Buchsenwand der Führungsbuchse 21 eingeschnitten und darin ein Innengewinde 41 eingeschnitten. Durch die Gewindeöffnung 40 ist somit ein Zugang zum Buchseninneren 35 der Führungsbuchse 21 gegeben.

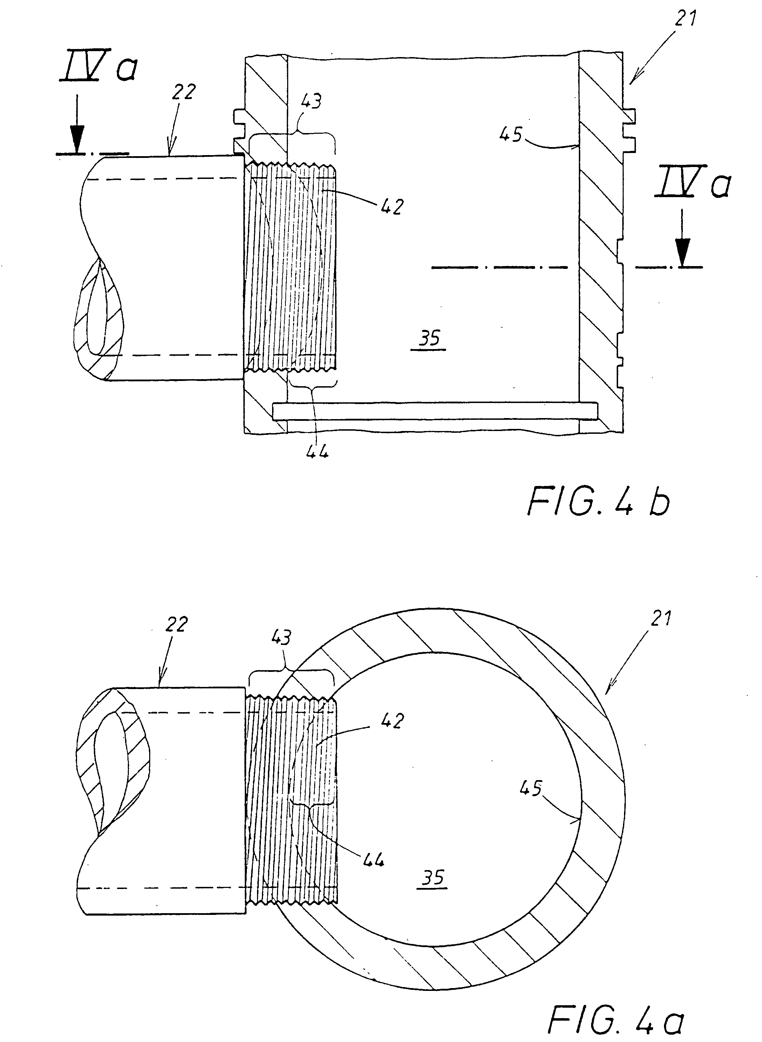

Ausweislich der Fig. 4a, 4b wird der Verbindungsbereich 43 der Anschlussbuchse 22 mit einem Außengewinde 42 versehen, welches mit dem Innengewinde 41 der Öffnung 40 verschraubbar ist. Es ergeben sich dann die aus Fig. 4a und 4b ersichtlichen Verhältnisse, wo der Gewindebereich 43 der Anschlussbuchse 22 mit einem Endstück 44 ins Buchseninnere 35 der Führungsbuchse 21 eingreift und diese an dieser Stelle verengt.

In der nächsten Verfahrensstufe gemäß Fig. 5a, 5b wird nun dieses Endstück 44 weggeschnitten. Dieser Wegschnitt erfolgt nach Vollzug der Gewindeverbindung bei 25. Es genügt hier einen Klemmsitz in der Gewindeverbindung 25 herzustellen, doch könnte man hier bedarfsweise auch ein Kleben oder Verlöten vornehmen. Der Wegschnitt erfolgt bündig mit der Zylinderinnenfläche 45 im Buchseninneren 35 der Führungsbuchse 21. Das weggeschnittene Endstück 44 hat also die Form eines Rohrsegments. Bei der fertigen Baueinheit 20 von Fig. 5a, 5b liegt also der volle Querschnitt im Buchseninneren 35 der Führungsbuchse 21 vor und steht, durch die vollzogene Gewindeverbindung 25 mit dem Buchseninneren 34 der Anschlussbuchse 22 in Verbindung.

Diese Baueinheit 20 wird nun in ein nicht näher gezeigtes Spritzgusswerkzeug eingebracht, das zur Herstellung der Anbohrarmatur aus dem erwähnten Kunststoffmaterial 15 dient. Damit eine formschlüssige Verbindung des Kunststoffmaterials 15 mit den beiden Stutzen 21, 22 der Baueinheit 20 zustande kommt, sind die jeweiligen äußeren Manteflachen 29 bzw. 26 mit Nuten 39 und/oder Stegen 38 versehen. Das Ergebnis ist aus Fig. 1 zu erkennen.

Die Anschlussbuchse 22 ist mit funktionsunterschiedlichen Abschnitten versehen, die anhand der Fig. 5b näher erläutert werden sollen. Es gibt zunächst eine an der Verbindungsstelle 25 befindlichen Anfangsabschnitt 46 der Anschlussbuchse 22, der in das Kunststoffmaterial 15 vom Gehäuse 10 gemäß Fig. 1 integriert ist. Dieser Abschnitt 46 befindet sich an der Innenfläche 19 des im Spritzgusswerkzeug erzeugten Abzweigstutzens 12 aus Kunststoffmaterial 15. Der sich daran anschließende Endabschnitt 47 ragt dann, wie Fig. 1 erkennen lässt, aus dem Kunststoffmaterial 15 des Abzweigstutzens 12 heraus. Er kann Konturen 48 aufweisen, die zum Anschluss der bereits erwähnten Abzweigleitung 36 dienen. Die zugehörigen, weiteren Anschlussmittel sind nicht mehr gezeigt.

Nach dem Anbohren und gegebenenfalls entferntem Bohrwerkzeug 30 liegt eine Verbindung zwischen dem Rohrinneren 37 der angebohrten Leitung 17 und der Abzweigleitung 36 vor, so dass es zu der durch den Pfeil 49 in Fig. 1 veranschaulichten Medienströmung 49 kommt.

### Bezugszeichenliste :

- 10: Gehäuse der Armatur
- 11: Stutzen von 10, Hauptstutzen
- 12: anderer Stutzen von 10, Abzweigstutzen
- 13: Sattel von 10
- 14: Kunststoffeinlage mit Heizleiter
- 15: Kunststoffmaterial von 10
- 16: Anbohrstelle von 17
- 17: Rohrleitung
- 18: Innenfläche von 11
- 19: Innenfläche von 12
- 20: metallische Baueinheit aus 21, 22
- 21: Buchse, Führungsbuchse
- 22: andere Buchse, Anschlussbuchse
- 23: Innengewinde in 21 von 11
- 24: Innennut von 21 in 11
- 25: Verbindungsstelle zwischen 21, 22, Gewindeverbindung
- 26: äußere Mantelfläche von 22
- 27: Metall von 21, Messing
- 28: Metall von 22, Rotguss
- 29: äußere Mantelfläche von 21
- 30: Bohrwerkzeug, Ventilglied
- 31: Gewindekopf von 30
- 32: Schneidzylinder von 30
- 33: Betätigungswerkzeug für 30, Ventilspindel
- 34: Buchseninneres von 12
- 35: Buchseninneres von 11
- 36: Abzweigleitung an 12
- 37: Rohrinneres von 17
- 38: Steg in 26 bzw. 29
- 39: Nut in 26 bzw. 29
- 40: seitliche Öffnung in 21, Gewindeöffnung
- 41: Innengewinde in 40 von 21
- 42: Außengewinde auf 43 von 22
- 43: Verbindungsbereich von 22, Gewindebereich
- 44: inneres Endstück von 43
- 45: Zylinderinnenfläche von 21
- 46: Anfangsabschnitt von 22
- 47: Endabschnitt von 22
- 48: äußere Kontur von 22, Anschlusselement
- 49: Pfeil der Medienströmung (Fig. 1)

## Patentansprüche

1. Anbohrarmatur für insbesondere unter Mediendruck stehende Rohrleitungen (17) aus Kunststoff,
mit einem an der Rohrleitung (17) befestigbaren Gehäuse (10) aus Kunststoffmaterial (15) mit zwei rohrförmigen Stutzen (11, 12), nämlich
einerseits mit einem Hauptstutzen (11), der an seiner Innenfläche (18) eine metallische Führungsbuchse (21) für ein darin drehbetätigbares Bohrwerkzeug (30) aufweist,
und andererseits mit einem Abzweigstutzen (12), der durch eine seitliche Öffnung (40) in der Führungsbuchse (21) ins Buchseninnere (35) des Hauptstutzens (11) mündet und in den, nach dem Anbohren der Rohrleitung (17), das Medium (49) strömt,
wobei die Führungsbuchse (21) ins Kunststoffmaterial (15) des Hauptstutzens (11) integriert ist,
und das Bohrwerkzeug (30) beim Herausdrehen eine Bohrung in die Rohrleitung (17) schneidet und gegegebenfalls als Ventilglied wirkt, welches die Medienströmung (49) zwischen der Bohrung und dem Abzweigstutzen (12) absperrt,
**gekennzeichnet durch**
eine metallische Baueinheit (20), die aus wenigstens zwei miteinander fest verbundenen Buchsen (21, 22) besteht,
diese Baueinheit (20) außer der metallischen Führungsbuchse (21) noch eine metallische Anschlussbuchse (22) aufweist, die an der seitlichen Öffnung (40) der Führungsbuchse (21) sitzt (25),
die Anschlussbuchse (22) der Baueinbeit (20) mindestens bereichsweise in das Kunststoffmaterial (15) des Abzweigstutzens (12) an dessen Innenfläche (19) integriert ist
und die Anschlussbuchse (22) - im Gebrauchsfall der Armatur, nach dem Anbohren - die aus der Führungsbuchse (21) kommende Medienströmung (49) aufnimmt und weiterleitet.

2. Anbohrarmatur nach Anspruch 1, **dadurch gekennzeichnet, dass** die Anschlussbuchse (12) der Baueinheit (20) durch Gewindeeingriff (41, 42) mit der Führungsbuchse verbunden (25) ist.

3. Anbohrarmatur nach Anspruch 2, **dadurch gekennzeichnet, dass** die seitliche Öffnung (40) in der Führungsbuchse (21) mit einem Innengewinde (41) und der zugehörige Verbindungsbereich (43) der Anschlussbuchse (22) mit einem darin verschraubbaren Außengewinde (42) versehen sind.

4. Anbohrarmatur nach einem oder mehreren der Ansprüche 1 bis 3, **dadurch gekennzeichnet, dass** das ins Buchseninnere (35) der Führunesbuchse (21) hineinragende Endstück (44) der befestigten Anschlussbuchse (22) weggeschnitten ist.

5. Anbohrarmatur nach Anspruch 4, **dadurch gekennzeichnet, dass** der Wegschnitt des Anschlussbuchsen-Endstücks (44) nach Vollzug der Verbindung (25) der beiden Buchsen (21, 22) in der Baueinheit (20) erfolgt.

6. Anbohrarmatur nach Anspruch 4 oder 5, **dadurch gekennzeichnet, dass** der Wegschnitt des Anschlussbuchsen-Endstücks (44) im Wesentlichen bündig mit der Zylinderinnenfläche (45) der Führungsbuchse (21) erfolgt.

7. Anbohrarmatur nach einem oder mehreren der Ansprüche 1 bis 6, **dadurch gekennzeichnet, dass** lediglich der an der Verbindungsstelle der Baueinheit (20) befindliche Anfangsabschnitt (46) der Anschlussbuchse (21) in das Kunststoffmaterial (15) des Abzweigstutzens (12) integriert ist,
während der Endabschnitt (47) der Anschlussbuchse (21) aus dem Kunststoffmaterial (15) des Abzweigstutzens (12) herausragt und Anschlusselemente (48) für eine Abzweigleitung (36) besitzt,
welche im Gebrauchsfall der Armatur zwecks Medienableitung (49) an die Anschlussbuchse (22) angeschlossen wird.

8. Anbohrarmatur nach einem oder mehreren der Ansprüche 1 bis 7, **dadurch gekennzeichnet, dass** die Führungsbuchse (21) und/oder die Anschlussbuchse (22) der Baueinheit (20) an ihren äußeren Mantelflächen (29, 26) Nuten (39) und/oder Stege (38) aufweisen,
welche in der fertigen Armatur vom Kunststoffmaterial (15) des Hauptstutzens (11) bzw. Abzweigstutzens (12) umgeben sind.

9. Anbohrarmatur nach einem oder mehreren der Ansprüche 1 bis 8, **dadurch gekennzeichnet, dass** die Baueinheit (20) der Kern eines Spritzgusswerkzeugs ist, welches zur Herstellung der Anbohrarmatur aus Kunststoffmaterial (15) dient.

10. Anbohrarmatur nach einem oder mehreren der Ansprüche 1 bis 9, **dadurch gekennzeichnet, dass** die Führungsbuchse (21) einerseits und die Anschlussbuchse (22) der Baueinheit (20) andererseits aus zwei zueinander unterschiedlichen Metallen (27, 28) bestehen.

11. Anbohrarmatur nach Anspruch 10, **dadurch gekennzeichnet, dass** die Führungsbuchse (21) der Baueinheit (20) aus Messing (27) gebildet ist.

12. Anbohrarmatur nach Anspruch 10 oder 11, **dadurch gekennzeichnet, dass** die Anschlussbuchse (22) der Baueinheit (20) aus Rotguss (28) besteht.

## Claims

1. Tapping stop valve particularly for pressurized pipelines (17) of plastic,
with a housing (10) of plastic material (15) with two tubular connections (11, 12) that can be fixed to the pipeline (17), i.e.
at one end with a main connection (11) that at its inner surface (18) has a metal guide sleeve (21) for a drilling tool (30) that can be rotated within it,
and on the other end has a branch connection (12) that terminates through a side opening (40) in the guide sleeve (21) in the inside of the sleeve (35) of the main connection (11) and in which the media (49) flows after the pipelines (17) has been tapped,
with the guide sleeve (21) being integrated into the plastic material (15) of the main connection (11),
and the drilling tool (30) cutting a hole in the pipeline (17) when unscrewed and also acting as a valve element that blocks the media flow (49) between the hole and the branch connection (12),
**characterized by**,
a metal assembly (20) consisting of at least two sleeves (21, 22) permanently connected to each other,
this assembly (20) having in addition to the metal guide sleeve (21) another metal connecting sleeve (22) that is seated (25) on the side opening (40) of the guide sleeve (21),
the connecting sleeve (22) of assembly (20) being integrated at least partially into the plastic material (15) of the branch connection (12) at its inner surface (19),
and the connecting sleeve (22), when the valve is used after tapping, taking and transporting the media flow (49) coming from the guide sleeve (21).

2. Tapping stop valve in accordance with claim 1, **characterized in that** the connecting sleeve (12) of the assembly (20) is connected to the guide sleeve (25) by means of a threaded connection (41, 42).

3. Tapping stop valve in accordance with claim 2, **characterized in that** the side opening (40) in the guide sleeve (21) is provided with an internal thread (41) and the associated connecting area (43) of the connecting sleeve (22) is provided with an external thread (42) that can be screwed into it.

4. Tapping stop valve in accordance with one or more of claims 1 to 3, **characterized in that** the end piece (44) of the attached connecting sleeve (22) that projects into the inside of the sleeve (35) of the guide sleeve (21) is cut off.

5. Tapping stop valve in accordance with claim 4, **characterized in that** the cutting off of the connecting sleeve end piece (44) takes place after the connection (25) of the two sleeves (21, 22) in the assembly (20) has been completed.

6. Tapping stop valve in accordance with claims 4 or 5, **characterized in that** the cutting off of the connecting sleeve end piece (44) takes place essentially flush with the inner face of the cylinder (45) of the guide sleeve (21).

7. Tapping stop valve in accordance with one or more of claims 1 to 6, **characterized in that** only the starting section (46) of the connecting sleeve (21) located at the connecting point of the assembly (20) is integrated into the plastic material (15) of the branch connection (12),
whereas the end section (47) of the connecting sleeve (21) projects out of the plastic material (15) of the branch connection (12) and has a connecting element (48) for a branch line (36),
when in use the valve is connected to the connecting sleeve (22) for the purpose of transporting a media (49).

8. Tapping stop valve in accordance with one or more of claims 1 to 7, **characterized in that** the guide sleeve (21) and/or the connecting sleeve (22) of the assembly (20) has grooves (39) and/or webs (38) on its inner covering surface (29, 26),
that on the completed valve are surrounded by the plastic material (15) of the main connection (11) or branch connection (12).

9. Tapping stop valve in accordance with one or more of claims 1 to 8, **characterized in that** the assembly (20) is the core of an injection molding tool used for the manufacture of the tapping stop valve of plastic material (15).

10. Tapping stop valve in accordance with one or more of claims 1 to 9, **characterized in that** the guide sleeve (21) on one hand and the connecting sleeve (22) of the assembly (20) on the other hand consist of two metals (27, 28) that differ from each other.

11. Tapping stop valve in accordance with claim 10, **characterized in that** the guide sleeve (21) of the assembly (20) is made of brass (27).

12. Tapping stop valve in accordance with claims 10 or 11, **characterized in that** the connecting sleeve (22) of the assembly (20) is made of red brass (28).

## Revendications

1. Accessoire de percement notamment de conduites (17) en plastique se trouvant sous la pression d'un fluide,
avec un boîtier (10) en matière plastique (15) fixable contre la conduite (17) et présentant deux embouts (11, 12) en forme de tuyau, à savoir,
présentant d'une part un embout principal (11), lequel présente contre sa surface intérieure (18) une douille de guidage métallique (21) destinée à un outil de percement (30) actionnable dedans par rotation,
et présentant d'autre part un embout de dérivation (12) qui, par un orifice latéral (40) ménagé dans la douille de guidage (21), aboutit à l'intérieur (35) de la douille de l'embout principal (11) et dans lequel, une fois amorcé le percement de la conduite (17), afflue le fluide (49),
sachant que la douille de guidage (21) est intégrée dans la matière plastique (15) de l'embout principal (11).
et que l'outil de percement (30), lors du dévissage, taille un alésage dans la conduite (17) et sert le cas échéant d'organe de vanne lequel fait barrage au flux du fluide (49) entre l'alésage et l'embout de dérivation (12),
**caractérisé par**
une unité constructive métallique (20) qui se compose d'au moins deux douilles (21, 22) fermement reliées entre elles,
cette unité constructive (20) présentant, outre la douille de guidage métallique (21), une douille de raccordement métallique (22) en assise (25) contre l'orifice latéral (40) de la douille de guidage (21),
la douille de raccordement (22) de l'unité constructive (20) étant intégrée au moins dans certaines zones dans la matière plastique (15) de l'embout de dérivation (12), contre sa surface intérieure (19),
et la douille de raccordement (22) - en cas d'utilisation de l'accessoire, après l'amorçage du percement - recevant et transmettant le flux de fluide (49) en train de sortir de la douille de guidage (21).

2. Accessoire de percement selon la revendication 1, **caractérisé en ce que** la douille de raccordement (12) de l'unité constructive (20) est reliée (25) par engrènement d'un taraudage/filetage (41, 42) avec la douille de guidage.

3. Accessoire de percement selon la revendication 2, **caractérisé en ce que** l'orifice latéral (40) dans la douille de guidage (21) est doté d'un taraudage (41) et que la zone de jonction afférente (43) de la douille de raccordement (22) présente un filetage (42) vissable dedans.

4. Accessoire de percement selon l'une ou plusieurs des revendications 1 à 3, **caractérisé en ce que** la pièce terminale (44) de la douille de branchement fixée (22), pièce faisant saillie à l'intérieur (35) de la douille de guidage (21), a été enlevée par taille.

5. Accessoire de percement selon la revendication 4, **caractérisé en ce que** la taille d'enlèvement de la pièce terminale (44) de la douille de branchement a lieu une fois réalisée la jonction (25) des deux douilles (21, 22) dans l'unité constructive (20).

6. Accessoire de percement selon la revendication 4 ou 5, **caractérisé en ce que** la taille d'enlèvement de la pièce terminale (44) de la douille de branchement a lieu essentiellement à ras avec la surface intérieure cylindrique (45) de la douille de guidage (21).

7. Accessoire de percement selon l'une ou plusieurs des revendications 1 à 6, **caractérisé en ce que** seul le segment de départ (46) de la douille de branchement (21), segment situé contre la zone de jonction de l'unité construtive (20), a été intégré dans la matière plastique (15) de l'embout de dérivation. (12),
tandis que le segment terminal (47) de la douille de branchement (21) fait saillie hors de la matière plastique (15) de l'embout de dérivation (12) et comporte des éléments (48) servant à raccorder une conduite de dérivation (36),
laquelle, en cas d'utilisation de l'accessoire pour dériver des fluides (49), vient se brancher contre la douille de raccordement (22).

8. Accessoire de percement selon l'une ou plusieurs des revendications 1 à 7, **caractérisé en ce que** la douille de guidage (21) et/ou la douille de raccordement (22) de l'unité constructive (20) présente, contre leurs surfaces enveloppantes extérieures (29, 26), des rainures (39) et/ou des nervures (38),
lesquelles dans la robinetterie finie sont entourées de la matière plastique (15) composant l'embout principal (11) et/ou l'embout de dérivation (12).

9. Accessoire de percement selon l'une ou plusieurs des revendications 1 à 8, **caractérisé en ce que** l'unité constructive (20) est le noyau d'un outil de moulage par injection servant à fabriquer l'accessoire de percement en matière plastique (15).

10. Accessoire de percement selon l'une ou plusieurs des revendications 1 à 9, **caractérisé en ce que** la douille de guidage (21) d'une part et la douille de raccordement (22) de l'unité constructive (20) d'autre part se composent de deux métaux (27, 28) différents l'un de l'autre.

11. Accessoire de percement selon la revendication 10, **caractérisé en ce que** la douille de guidage (21) de l'unité constructive (20) a été construite en laiton (27).

12. Accessoire de percement selon la revendication 10 ou 11, **caractérisé en ce que** la douille de raccordement (22) de l'unité constructive (20) se compose de fonte rouge (28).
